Europäisches Patentamt

European Patent Office

Office européen des brevets

(11) Veröffentlichungsnummer: **0 281 048 B1**

## (12) EUROPÄISCHE PATENTSCHRIFT

(45) Veröffentlichungstag der Patentschrift: **22.09.93**

(21) Anmeldenummer: **88102977.1**

(22) Anmeldetag: **29.02.88**

(51) Int. Cl.5: **G02B 1/10**, G02B 5/26, B32B 17/10

(54) **Beschichtete Kunststoffolie und daraus hergestelltes Kunststofflaminat.**

(30) Priorität: **06.03.87 DE 3707214**

(43) Veröffentlichungstag der Anmeldung:
**07.09.88 Patentblatt 88/36**

(45) Bekanntmachung des Hinweises auf die
Patenterteilung:
**22.09.93 Patentblatt 93/38**

(84) Benannte Vertragsstaaten:
**BE DE ES FR GB IT NL SE**

(56) Entgegenhaltungen:
**EP-A- 0 077 672**
**DE-A- 3 307 661**

**THIN SOLID FILMS, Band 89, Nr. 3, März 1982,
Seiten 287-293, Elsevier Sequoia, Lausanne,
CH; H. KÖSTLIN et al.: "Optimization of transparent heat mirrors based on a thin silver
film between antireflection films"**

(73) Patentinhaber: **HOECHST AKTIENGESELL-
SCHAFT**

**D-65926 Frankfurt(DE)**

(72) Erfinder: **Grolig, Gerhard, Dr. Dipl.-Phys.
Gartenstrasse 6
D-6028 Mörfelden-Walldorf(DE)**
Erfinder: **Schmidt, Günther, Dr. Dipl.-Phys.
Germanenweg 13
D-6272 Niedernhausen(DE)**

## Beschreibung

Die Erfindung betrifft eine beschichtete Kunststoffolie mit hohem Transmissionsvermögen für sichtbares Licht und mit hohem Reflexionsvermögen für Infrarotstrahlung, mit einer Trägerfolie aus einem transparenten Polymer und einer zwischen zwei dielektrischen Schichten eingebetteten Reflexionsmetallschicht sowie ein daraus hergestelltes Kunststofflaminat.

Transparente beschichtete Kunststoffolien dienen als transparente Wärmespiegel, darunter sind optische Filter zu verstehen, die Infrarot- bzw. Wärmestrahlung reflektieren und für sichtbares Licht, d.h. Strahlung aus dem sichtbaren Bereich des elektromagnetischen Spektrums, durchlässig sind.

Derartige Wärmefilter sollen einen möglichst großen Anteil des sichtbaren Lichts hindurchlassen und einen möglichst großen Anteil der einfallenden Wärmestrahlung reflektieren, wodurch insbesondere verhindert werden soll, daß das Innere eines Raums durch Sonneneinstrahlung aufgeheizt wird.

Die Automobilindustrie hat in den letzten Jahren daran gearbeitet, den Treibstoffverbrauch der Autos zu verringern. Dies gelingt in erster Linie durch eine deutliche Reduzierung des Luftwiderstandbeiwerts der Autos, da bekannterweise der weitaus größte Teil der für die Autofahrt benötigten Energie für die Überwindung des Luftwiderstands benötigt wird. Im Zuge dieser Entwicklung werden die Glasflächen der Autos immer größer und somit die Verbundglasscheiben immer stärker schräggestellt. Als Folge hiervon kommt der bekannte "Treibhauseffekt" im Autoinneren, insbesondere in den Sommermonaten, viel stärker zum Tragen. In Autos, die vier Stunden bei einer Außentemperatur von beispielsweise 35 °C in der Sonne stehen, werden Temperaturen im Wageninneren bis zu 75 °C gemessen. Ein überhitzter Innenraum stellt eine große physische und psychische Belastung für die Wageninsassen, insbesondere für den Fahrer, dar und trägt so zu einer Verringerung der Verkehrssicherheit bei.

Eine Möglichkeit, die Temperaturen im Wageninneren, auch im Sommer, nicht zu stark ansteigen zu lassen, besteht darin, die Glasscheiben des Autos mit einer Beschichtung auszustatten, die im sichtbaren Spektralbereich große Transparenz besitzt und im gesamten Infrarotbereich stark reflektiert.

In der DE-OS 33 07 661 ist ein Verfahren zum Herstellen von Glasscheiben mit hohem Transmissionsverhalten im sichtbaren Spektralbereich und mit hohem Reflexionsverhalten gegen Wärmestrahlung beschrieben. Nach diesem Verfahren werden ebene Glasscheiben durch Kathodenzerstäubung direkt beschichtet. Auf den ebenen Glasscheiben wird eine erste Schicht aus der Gruppe $In_2O_3$,

$SnO_2$ bzw. deren Mischoxide erzeugt. Auf diese erste Schicht werden eine zweite Schicht aus Silber, eine dritte Schicht aus der Gruppe Al, Ti, Ta, Cr, Mn, Zr und eine vierte Schicht aus der Gruppe $In_2O_3$, $SnO_2$ bzw. deren Mischoxide aufgebracht. Auf diese Weise lassen sich transparente Wärmespiegel herstellen, jedoch hat das Verfahren Nachteile: Einzelne Glasscheiben zu beschichten, ist sehr aufwendig und teuer. Dazu kommt noch die Schwierigkeit, daß zur Herstellung von Windschutzscheiben für Autos die ebenen, beschichteten Glasscheiben einen zusätzlich Biegeprozeß durchlaufen müssen, was der Qualität der Beschichtung abträglich ist. Darüber hinaus ist eine Beschichtung, die ohne die dritte Schicht auskommt, die eine reine Schutzfunktion für die zweite Schicht aus Silber hat, wünschenswert.

Aus der EP-A-0 077 672 ist eine lichtdurchlässige Folie, bestehend aus einer transparenten Polymer-Trägerfolie und einer lichtdurchlässigen Metallschicht aus einem Metall aus der Gruppe Ag, Au, Cu und deren Legierungen, bekannt. Eine dielektrische Schicht aus Titan-, Wismuth-, Wolfram-, Indium-, Zirkon- oder Siliziumoxid wird auf eine oder beide Seiten der Metallschicht aufgebracht. Zusätzlich kann noch eine Schutzschicht aus Ti, Zr, Se, C auf einer oder beiden Seiten der Metallschicht ausgebildet sein. Die lichtdurchlässige Folie wird beidseitig mit Polyvinylbutyral zu einem Laminat kaschiert, das beispielsweise zwischen zwei Glasscheiben eingebracht und mit diesen zu einer Verbundsicherheitsglasscheibe integriert wird.

Die Trägerfolie des Laminats besteht im allgemeinen aus Polyethylenterephthalat. Die beiden dielektrischen Schichten, die zu beiden Seiten der Metallschicht aufgebracht sind, werden beispielsweise durch Hydrolyse von Tetrabutyltitanat in Alkohol auf der Metallschicht niedergeschlagen.

Aufgabe der Erfindung ist es, die beschichtete Kunststoffolie der eingangs beschriebenen Art so zu verbessern, daß sie einen Wärmespiegel mit hohem Transmissionsvermögen für sichtbares Licht und hohem Reflexionsvermögen für IR-Strahlung bildet, ohne daß eine Schutzschicht für die Silberschicht erforderlich ist, und daß sie ein wesentlicher Bestandteil eines Laminats in einem Verbundsicherheitsglas ist, das ebenso problemlos und nach den gleichen Methoden wie eine herkömmliche Polyvinylbutyral-Folie verarbeitet werden kann.

Diese Aufgabe wird erfindungsgemäß dadurch gelöst, daß jede der beiden dielektrischen Schichten aus einem Metallnitrid besteht. In Ausgestaltung der Erfindung besteht die Reflexionsmetallschicht aus einem Metall der Gruppe Silber, Gold, Kupfer. Die dielektrischen Schichten sind bevorzugt aus Aluminium- oder Siliziumnitrid.

In Ausgestaltung der Erfindung weist die Reflexionsmetallschicht eine Dicke zwischen 5 und 40 nm auf und beträgt die Dicke jeder der beiden dielektrischen Schichten 20 bis 60 nm. Die Trägerfolie ist beispielsweise Polyethylenterephthalat mit einer Dicke zwischen 5 und 100 $\mu$m. Die Strahlendurchlässigkeit im sichtbaren Spektralbereich für eine Wellenlänge $\lambda$ = 550 nm ist für die beschichtete Kunststofffolie größer/gleich 73 % und das Reflexionsvermögen der beschichteten Kunststofffolie im nahen Infrarotbereich für eine Wellenlänge $\lambda$ = 2500 nm beträgt zumindest 80 %.

Die dielektrischen Schichten und die Reflexionsmetallschicht sind aufeinanderfolgend durch Kathodenzerstäubung auf die Trägerfolie aufgebracht. Die beschichtete Kunststofffolie ist Ausgangsmaterial für ein Kunststofflaminat, und jede der beiden Seiten der Kunststofffolie wird hierzu mit je einer Folie aus Polyvinylbutyral kaschiert. Die Dicke der einzelnen Polyvinylbutyralfolie beträgt dabei 0,2 bis 0,4 mm. Dieses Kunststofflaminat, eingebettet zwischen zwei geformten Glasplatten, bildet zusammen mit diesen eine Verbundsicherheitsglasscheibe mit dem Aufbau Glas/Kunststofflaminat/Glas. Derartige Verbundsicherheitsglasscheiben werden insbesondere als Windschutzscheiben in Kraftfahrzeuge eingebaut.

Hohe Reflexion im Infrarotbereich ist eine charakteristische Eigenschaft von Metallen mit großer elektrischer Leitfähigkeit. Die Lichtdurchlässigkeit im sichtbaren Spektralbereich ist wiederum typisch für Halbleiter mit großem Bandabstand $\Delta E \geq 3$ eV. Üblicherweise lassen sich transparente Wärmespiegel auf zwei Arten realisieren, entweder durch Halbleiter mit großem Bandabstand als Schichtmaterial, die eine nicht-stöchiometrische Zusammensetzung besitzen und/oder geeignet dotiert sind oder durch sehr dünne Metallschichten mit einer Dicke in der Größenordnung von 10 nm und weniger, die beidseitig mit einer dielektrischen Schicht versehen sind. Die erste Art der Realisierung erfordert zu große Schichtdicken von etwa 1$\mu$m und mehr, als daß sie für den Einsatz bei Windschutzscheiben geeignet wäre. Deshalb kommt für den Einsatz von transparenten Wärmespiegeln in Verbundsicherheitsglasscheiben für Kraftfahrzeuge nur die Ausführungsform in Betracht, bei der sehr dünne Metallschichten, die beidseitig mit einer dielektrischen Schicht versehen sind, verwendet werden.

Geeignete Metalle für diese Metallschicht sind in erster Linie Silber, Gold und Kupfer sowie Legierungen dieser Metalle. Bei Wellenlängen kleiner als 600 nm, also in einem Bereich, in dem das Sonnenspektrum sein Maximum besitzt, ist das Absorptionsvermögen von Kupfer und Gold wesentlich größer als dasjenige von Silber. Die verminderte Lichtdurchlässigkeit einer Silberschicht im sichtbaren Spektralbereich ist auf das höhere Reflexionsvermögen von Silber im Vergleich zu Gold und Kupfer zurückzuführen. Durch das Einbetten der Silberschicht zwischen zwei dielektrischen Antireflexionsschichten wird das hohe Reflexionsvermögen der Silberschicht im sichtbaren Spektralbereich reduziert. Mögliche dielektrische Materialien für die Antireflexionsschichten sind Metalloxide oder Metallnitride.

Wird die Trägerfolie, nämlich eine Polyesterfolie, zunächst mit einer Metalloxidschicht und anschließend mit einer Silberschicht, die eine Schichtdicke kleiner als 25 nm besitzt, beschichtet, so stimmen die gemessenen optischen Eigenschaften, wie das Reflexionsvermögen und das Transmissionsvermögen, weitgehend mit den theoretischen Vorhersagen überein. Wird auf die Silberschicht eine weitere Oxidschicht aufgebracht, so weist die beschichtete Folie eine Lichtdurchlässigkeit von ca. 75 % auf und - entgegen der Erwartung - ein Reflexionsvermögen für Wärmestrahlung von maximal nur 35 %. Untersuchungen mit dem Rasterelektronenmikroskop und einem Elektronenspektroskopiegerät zur chemischen Analyse von Oberflächen (ESCA-Gerät) zeigen, daß beim Aufbringen der obersten Metalloxidschicht die zunächst geschlossene Silberschicht unter dem Einfluß des Kathodenzerstäubungsprozesses beim Aufbringen der obersten Metalloxidschicht aufgerissen wird, d.h. es bilden sich hierbei voneinander isolierte tropfenförmige "Silberberge" mit einem Durchmesser von ca. 1 $\mu$m. Dadurch wird das Reflexionsvermögen einer derart beschichteten Polyesterfolie erheblich reduziert. Dieser Mechanismus ist im übrigen in der DE-OS 33 07 661 beschrieben.

Das Aufreißen der Silberschicht wird dadurch verhindert, daß zwischen der Silberschicht und der obersten Metalloxidschicht eine zusätzliche Metallschicht aufgebracht wird. Auf diese Weise lassen sich transparente Wärmespiegel herstellen, bei denen die einzelnen Schichten jeweils durch Kathodenzerstäubung aufgebracht werden.

Im Gegensatz dazu kommen die erfindungsgemäß hergestellten transparenten Wärmespiegel ohne diese zusätzliche Metallschicht aus.

Ausführungsbeispiele der Erfindung werden im folgenden näher erläutert.

Es zeigen:

Figur 1    einen Querschnitt durch eine beschichtete Kunststofffolie nach der Erfindung,

Figur 2    einen Querschnitt durch ein Kunststofflaminat, bestehend aus einer beschichteten Kunststofffolie und auf jeder Seite der Kunststofffolie aufkaschierten Polyvinylbutyralfolien, und

Figur 3    die Lichtdurchlässigkeit und die Reflexion einer beschichteten Kunststoffolie mit dem Aufbau Trägerfolie/Aluminiumnitrid/Silber/Aluminiumnitrid, in Abhängigkeit von der Wellenlänge der einfallenden Strahlung.

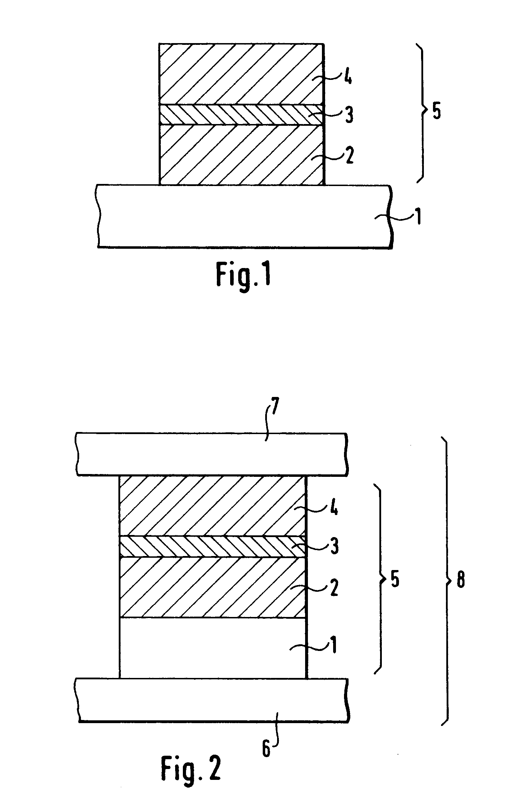

Figur 1 zeigt einen Querschnitt durch eine beschichtete Kunststoffolie 5, die aus einer Trägerfolie 1 und einem Schichtaufbau auf der Trägerfolie besteht, der mehrere Schichten umfaßt. Auf der Trägerfolie 1 sind durch Kathodenzerstäubung eine erste Metallnitridschicht, eine Metallschicht und eine zweite Metallnitridschicht aufgebracht. Die Trägerfolie 1 ist eine Polyesterfolie bzw. eine Polyethylenterephthalatfolie mit einer Dicke zwischen 10 und 50 $\mu$m. Die beiden Metallnitridschichten 2 und 4 sind dielektrische Schichten. Sie bilden Antireflexionsschichten, welche die Metallschicht 3 einschließen. Die Dicke jeder der beiden Metallnitridschichten beträgt 20 bis 60 nm. Das Metallnitrid der beiden Schichten 2 und 4 ist Aluminiumnitrid. Die Metallschicht 3 bildet eine Reflexionsmetallschicht und besteht aus einem Metall der Gruppe Silber, Gold, Kupfer, mit der Bevorzugung von Silber. Die Metallschicht 3 weist im allgemeinen eine Dicke zwischen 5 und 40 nm auf.

Die beiden dielektrischen Schichten 2 und 4 können, neben Aluminium-, auch aus Siliziumnitrid bestehen, das jeweils eine Dicke von 20 bis 60 nm besitzt.

In Figur 2 ist ein Querschnitt durch ein Kunststofflaminat 8 dargestellt, das aus einer beschichteten Kunststoffolie 5, wie sie in Figur 1 gezeigt ist, und je zwei Polyvinylbutyralfolien 6 und 7 besteht, die auf je einer Seite der Kunststoffolie 5 aufkaschiert sind. Derartige Polyvinylbutyralfolien (PVB-Folien) sind im Stand der Technik bekannt und werden deswegen nicht näher beschrieben. Die Verbindung zwischen den PVB-Folien 6 und 7 und der beschichteten Kunststoffolie 5 kann durch geeignete transparente Kleber erfolgen, die in Figur 2 nicht gezeigt sind. Die Dicke der einzelnen PVB-Folie 6 bzw. 7 beträgt 0,2 bis 0,4 mm, so daß die Gesamtdicke des Kunststofflaminats 8 maximal 0,85 mm erreicht.

Für den Fall, daß geringe Abstriche an dem Reflexionsvermögen der beschichteten Kunststoffolie 5 noch den Anforderungen genügen, kann die erste Metallnitridschicht 2 weggelassen werden.

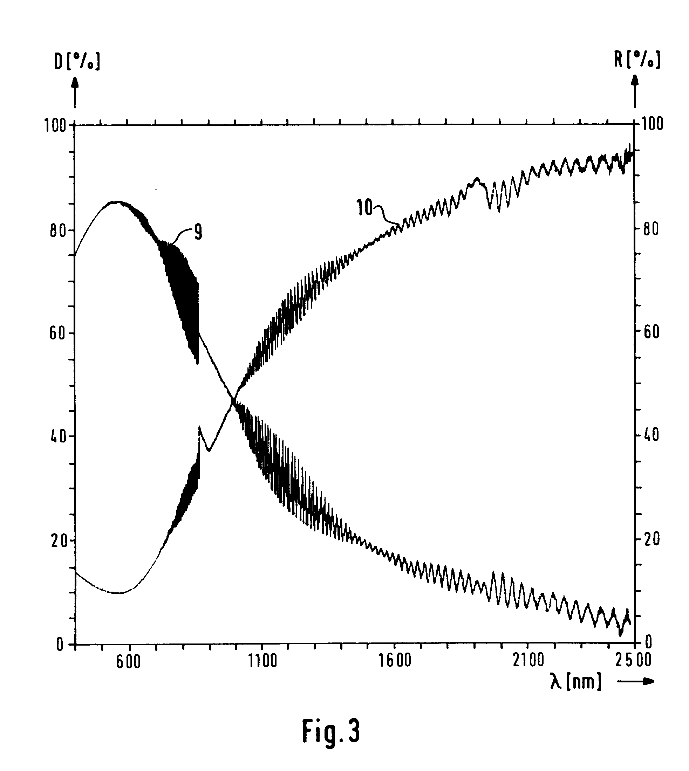

Figur 3 zeigt eine Transmissionskurve 9 im Wellenlängenbereich zwischen 400 und 2500 nm einer beschichteten Kunststoffolie, die einen Schichtaufbau Trägerfolie/Aluminiumnitrid/Silber/-Aluminium nitrid aufweist. Das Maximum der Transmissionskurve liegt bei einer Wellenlänge $\lambda$ = 550 nm und beträgt 86 %. Aus der Reflexionskurve 10 ist ersichtlich, daß das Maximum der Reflexion bei einer Wellenlänge $\lambda$ = 2500 nm über 90 % liegt. Die Dicke der Trägerfolie aus Polyethylenterephthalat (Hostaphan® 4400 der HOECHST AG) beträgt 36 $\mu$m.

Beispiel

Auf eine Polyethylenterephthalatfolie 1 der Dikke von 36 $\mu$m wurden in einer Kathodenzerstäubungsanlage die drei Schichten 2 bis 4 gemäß der Zeichnung in Figur 1 aufgebracht. Die Zerstäubung des Aluminiums fand in Stickstoffatmosphäre statt, so daß die Schichten 2 und 4 als Aluminiumnitridschichten niedergeschlagen wurden. Die Zerstäubung von Silber erfolgte in nichtreaktiver Atmosphäre und ergab die Silberschicht 3. Die beiden Aluminiumnitridschichten 2 und 4 und die Silberschicht 3 besitzen eine Gesamtschichtdicke von 96 nm. Die optischen Eigenschaften der beschichteten Kunststoffolie 5 sind in Figur 3 dargestellt, wobei die Transmission bei einer Wellenlänge $\lambda$ = 550 nm bei 86 % liegt und die Reflexion bei einer Wellenlänge $\lambda$ = 2500 nm über 90 % beträgt. Das spektrale Verhalten der beschichteten Kunststoffolie 5 im Wellenlängenbereich von 400 bis 2500 nm ist aus der Transmissionskurve 9 und der Reflexionskurve 10 der Figur 3 ersichtlich.

Die dielektrischen Schichten aus Siliziumnitrid, das durch Zerstäuben von Silizium in Stickstoffatmosphäre in der Kathodenzerstäubungsanlage erhalten wird, ergeben ähnlich hohe Werte für die Transmission und Reflexion.

Bei größeren Dicken der Metallnitrid- und der Metallschicht werden die Transmission und die Reflexion abnehmen, jedoch sollen die Dicken der Schichten in jedem Fall so gewählt werden, daß die Strahlendurchlässigkeit der beschichteten Kunststoffolie im sichtbaren Spektralbereich für eine Wellenlänge $\lambda$ = 550 nm größer/gleich 73 % und das Reflexionsvermögen im nahen Infrarotbereich für eine Wellenlänge $\lambda$ = 2500 nm zumindest 80 % beträgt.

Da bekannterweise Nitride sehr glatte Oberflächen bilden, ergibt sich bei derart beschichteten Kunststofffolien eine sehr große Widerstandsfähigkeit gegen Salzwasser und sonstige agressive Atmosphäre. Darüber hinaus ist die Wasseraufnahme derartiger Folien über längere Zeitspannen sehr gering, so daß die Kunststofffolien lagerungsbeständig sind.

**Patentansprüche**

1. Beschichtete Kunststoffolie (5) mit hohem Transmissionsvermögen für sichtbares Licht und mit hohem Reflexionsvermögen für Infrarotstrahlung, mit einer Trägerfolie (1) aus einem transparenten Polymer und einer zwischen zwei dielektrischen Schichten (2,4) eingebetteten Reflexionsmetallschicht (3), dadurch gekennzeichnet, daß jede der beiden dielektrischen Schichten (2,4) aus einem Metallnitrid besteht.

2. Beschichtete Kunststoffolie nach Anspruch 1, dadurch gekennzeichnet, daß die Reflexionsmetallschicht (3) aus einem Metall der Gruppe Silber, Gold, Kupfer besteht.

3. Beschichtete Kunststoffolie nach Anspruch 1, dadurch gekennzeichnet, daß das Metallnitrid der dielektrischen Schichten Aluminium- oder Siliziumnitrid ist.

4. Beschichtete Kunststoffolie nach Anspruch 2, dadurch gekennzeichnet, daß die Reflexionsmetallschicht (3) eine Dicke zwischen 5 und 40 nm aufweist und daß die Dicke jeder der beiden dielektrischen Schichten 20 bis 60 nm beträgt.

5. Beschichtete Kunststoffolie nach Anspruch 1, dadurch gekennzeichnet, daß die Trägerfolie (1) Polyethylenterephthalat mit einer Dicke zwischen 5 und 100 $\mu$m, insbesondere zwischen 5 und 50 $\mu$m, ist.

6. Beschichtete Kunststoffolie nach Anspruch 1, dadurch gekennzeichnet, daß ihre Strahlendurchlässigkeit im sichtbaren Spektralbereich für eine Wellenlänge $\lambda$ = 550 nm größer/gleich 73 % und ihr Reflexionsvermögen im nahen Infrarotbereich für eine Wellenlänge $\lambda$ = 2500 nm zumindest 80 % beträgt.

7. Beschichtete Kunststoffolie nach Anspruch 1, dadurch gekennzeichnet, daß die dielektrischen Schichten und die Reflexionsmetallschicht (2, 3, 4) aufeinanderfolgend durch Kathodenzerstäubung auf die Trägerfolie (1) aufgebracht sind.

8. Kunststofflaminat (8) mit hohem Transmissionsvermögen für sichtbares Licht und mit hohem Reflexionsvermögen für Infrarotstrahlung, gekennzeichnet durch eine beschichtete Kunststoffolie (5) nach den Merkmalen der Ansprüche 1 bis 7, deren beide Seiten mit je einer Folie aus Polyvinylbutyral (6,7) kaschiert sind.

9. Kunststofflaminat nach Anspruch 8, dadurch gekennzeichnet, daß die Dicke der einzelnen Polyvinylbutyralfolie 0,2 bis 0,4 mm beträgt.

10. Kunststofflaminat nach den Ansprüchen 8 und 9, dadurch gekennzeichnet, daß es, eingebettet zwischen zwei geformten Glasplatten, mit diesen zusammen eine Verbundsicherheitsglasscheibe mit dem Aufbau Glas/Kunststofflaminat/Glas bildet.

## Claims

1. A coated plastic film (5) of high transmittance for visible light and high reflectance for infrared radiation, with a carrier film (1) of a transparent polymer and a reflection metal layer (3) embedded between two dielectric layers, characerized in that each of the two dielectric layers (2, 4) is composed of a metal nitride.

2. A coated plastic film as claimed in claim 1, characterized in that the reflection metal layer (3) is composed of a metal from the group comprising silver, gold and copper.

3. A coated plastic film as claimed in claim 1, characterized in that the metal nitride of the dielectric layers is aluminum nitride or silicon nitride.

4. A coated plastic film as claimed in claim 2, characterized in that the reflection metal layer (3) has a thickness of between 5 and 40 nm and that the thickness of each of the two dielectric layers is 20 to 60 nm.

5. A coated plastic film as claimed in claim 1, characterized in that the carrier film (1) comprises polyethylene terephthalate of a thickness of between 5 and 100 $\mu$m, especially between 5 and 50 $\mu$m.

6. A coated plastic film as claimed in claim 1, characterized in that its transparency in the visible spectral region for a wavelength of $\lambda$ = 550 nm is greater than or equal to 73 % and its reflectance in the near infrared region for a wavelength of $\lambda$ = 2500 nm is at least 80 %.

7. A coated plastic film as claimed in claim 1, characterized in that the dielectric layers and the reflection metal layer (2, 3, 4) have been applied successively to the carrier film (1) by cathodic sputtering.

8. A plastic laminate (8) having a high transmittance for visible light and high reflectance for infrared radiation, characterized by a coated plastic film (5) according to the features claimed in claims 1 to 7, the two sides of which are each laminated with a film (6, 7) of polyvinyl butyral.

9. A plastic laminate as claimed in claim 8, characterized in that the thickness of the indivudual polyvinyl butyral film is 0.2 to 0.4 mm.

10. A plastic laminate as claimed in claims 8 and 9, characterized in that, embedded between two shaped glass plates, it forms together with these a laminated safety glass pane of glass/plastic laminate/glass structure.

**Revendications**

1. Pellicule de matière plastique revêtue (*5*) à haut pouvoir de transmission de la lumière visible et à haut pouvoir de réflexion d'un rayonnement infrarouge, comportant une pellicule de support (*1*) à base d'un polymère transparent et une couche métallique réfléchissante (*3*) intercalée entre deux couches diélectriques (*2*, *4*), caractérisée en ce que chacune des deux couches diélectriques (*2*, *4*) est constituée d'un nitrure métallique.

2. Pellicule de matière plastique revêtue selon la revendication 1, caractérisée en ce que la couche métallique réfléchissante (*3*) est constituée d'un métal choisi parmi l'argent, l'or, le cuivre.

3. Pellicule de matière plastique revêtue selon la revendication 1, caractérisée en ce que le nitrure métallique des couches diélectriques est le nitrure d'aluminium ou de silicium.

4. Pellicule de matière plastique revêtue selon la revendication 2, caractérisée en ce que la couche métallique réfléchissante (*3*) présente une épaisseur comprise entre 5 et 40 nm et en ce que l'épaisseur de chacune des deux couches diélectriques va de 20 à 60 nm.

5. Pellicule de matière plastique revêtue selon la revendication 1, caractérisée en ce que la pellicule de support (*1*) est du poly(téréphtalate d'éthylène) ayant une épaisseur comprise entre 5 et 100 μm, en particulier entre 5 et 50 μm.

6. Pellicule de matière plastique revêtue selon la revendication 1, caractérisée en ce que sa transparence au rayonnement dans la région visible du spectre, à une longueur d'onde λ = 550 nm, est ≥ 73 % et son pouvoir de réflexion dans la région de l'infrarouge proche, à une longueur d'onde λ = 2 500 nm, est au moins de 80 %.

7. Pellicule de matière plastique revêtue selon la revendication 1, caractérisée en ce que les couches diélectriques et la couche métallique réfléchissante (*2*, *3*, *4*) sont appliquées successivement par pulvérisation cathodique sur la pellicule de support (*1*).

8. Stratifié plastique (*8*) à haut pouvoir de transmission de la lumière visible et à haut pouvoir de réflexion d'un rayonnement infrarouge, caractérisé par une pellicule de matière plastique revêtue (*5*) selon les caractéristiques des revendications 1 à 7, dont les deux côtés sont doublés chacun d'une pellicule de poly(butyral de vinyle) (*6*, *7*).

9. Stratifié plastique selon la revendication 8, caractérisé en ce que l'épaisseur de la pellicule de poly(butyral de vinyle) individuelle va de 0,2 à 0,4 mm.

10. Stratifié plastique selon les revendications 8 et 9, caractérisé en ce que, intercalé entre deux plaques de verre mises en forme, il constitue conjointement avec celles-ci une vitre feuilletée de sécurité constituée de verre/stratifié plastique/verre.

Fig.1

Fig. 2

Fig.3